# EUROPEAN PATENT SPECIFICATION

(11) **EP 2 815 906 B1**
(45) Date of publication and mention of the grant of the patent: **29.03.2017**
(21) Application number: 13748619.7
(22) Date of filing: 06.02.2013
(51) Int. Cl.: B60H 1/00, B60S 1/02

(54) **VEHICLE AIR CONDITIONING DEVICE**
KLIMAANLAGEVORRICHTUNG FÜR FAHRZEUG
DISPOSITIF DE CLIMATISATION DE VÉHICULE

(30) Priority: 14.02.2012 JP 2012029339
(43) Date of publication of application: 24.12.2014
(73) Proprietor: Japan Climate Systems Corporation, Higashihiroshima-shi Hiroshima 739-0153 (JP)
(72) Inventor: NAGAOKA, Shuji, Higashihiroshima-shi Hiroshima 739-0153 (JP); NAGATA, Hiromichi, Higashihiroshima-shi Hiroshima 739-0153 (JP)
(74) Representative: Behr, Wolfgang
(86) International application number: PCT/JP2013/000644
(87) International publication number: WO 2013/121740

(56) References cited:
- JP-A- 2008 080 889
- JP-A- 2008 080 889
- JP-A- 2010 195 173
- JP-A- 2010 195 173
- JP-U- H0 324 912
- JP-U- H0 324 912
- JP-U- H0 479 713
- JP-U- H0 479 713

## Description

The present disclosure relates to a vehicle air conditioner for supplying conditioned air to not only front seats but also rear seats of a vehicle.

A typical vehicle air conditioner is accommodated inside an instrument panel in a passenger compartment, and includes a defroster passage, a vent passage, and a heat passage. The defroster passage supplies conditioned air generated in an air mixing space toward an inner surface of a windscreen. The vent passage supplies it mainly to an upper body of a front seat passenger. The heat passage supplies it to legs of the passenger. These passages are independently opened or closed to switch various operation modes.

Another known air conditioner also includes a conditioned air passage for a rear seat to improve the comfortability in the rear seat of the vehicle. This air conditioner blows conditioned air to rear seat passengers.

Japanese Unexamined Patent Publication No. H6-92135 discloses the vehicle air conditioner including a rear seat damper and a rear seat duct. The rear seat damper opens or closes a conditioned air passage for a rear seat. The rear seat duct extends to the rear seat. The rear seat damper is opened or closed by a controller. If a passenger selects a rear seat blow mode, the rear seat damper is opened to blow the conditioned air into the rear seat.

However, Japanese Unexamined Patent Publication No. H6-92135 discloses the rear seat damper that has a disadvantage in its actuation. For example, it is costly to install an extra actuator for the rear seat damper.

To avoid the disadvantage, a front seat vent passage connected with the rear seat duct might send the conditioned air in the front seat vent passage to the rear seat duct. This allows a front seat vent damper to open or close the rear seat duct without the extra rear seat damper, thereby reducing the cost. However, this configuration allows the conditioned air to be supplied to the rear seat passenger only during the vent mode, and only provides the rear seat passenger with less comfortability.

If the damper for opening or closing the front seat vent passage is coupled with the rear seat damper, the rear seat damper might work without the actuator. However, this configuration also allows the conditioned air to be supplied to the rear seat passenger only when the front seat vent damper is opened. In other words, this configuration provides limited opportunities to supply the conditioned air to the rear seat passenger, and only provides the rear seat passenger with less comfortability.

If the rear seat duct communicates with the air mixing space without the rear seat damper, the conditioned air in the air mixing space can flow into the rear seat duct at all times. This configuration provides unlimited opportunities to supply the conditioned air to the rear seat passenger. However, this configuration allows warm air to flow into the rear seat duct, e.g., even when it is necessary to melt the frost on a windscreen in winter. That is, this configuration cannot keep an adequate amount of warm air to the defroster passage, and thus provides poor defroster performance.

Document JP H03 24912 U shows a vehicle air conditioner according to the preamble of claim 1. In this document, the the defroster door and the air supply switching door for front and rear seats operate with each other in the foot mode. Specifically, in response to the change in the degree of opening of the air supply switching door for front and rear seats, the degree of opening of the defroster door is changed by the gang unit so as to make the amount of the defroster air constant.

Documents JP 2008 080889 A, JP H04 79713 U and JP 2010 195173 A show further vehicle air conditioners.

It is an object of the present invention to improve the comfortability of the rear seat passengers.

This object is solved by the vehicle air conditioner according to claim 1.

A first aspect of the invention is a vehicle air conditioner including a defroster passage, a vent passage, a heat passage, a rear seat passage, a defroster damper, and a rear seat damper. The defroster passage supplies conditioned air toward an inner surface of windscreen of a vehicle. The vent passage supplies the conditioned air to a front seat passenger. The heat passage supplies the conditioned air to legs of the front seat passenger. The rear seat passage supplies the conditioned air to a rear seat. The defroster damper opens or closes the defroster passage. The rear seat damper opens or closes the rear seat passage. The vehicle air conditioner also includes a coupling member coupling the defroster damper with the rear seat damper and allowing the rear seat damper to operate with the defroster damper.

When the defroster damper of this configuration is opened or closed by, e.g., an actuator, the driving power of this actuator enables the rear seat damper to be opened or closed without an extra actuator for the rear seat damper.

The rear seat damper that is opened when the defroster damper is closed can supply the conditioned air to the rear seat passage in, e.g., an operation mode where the vent passage is opened or an operation mode where the heat passage is opened. This configuration can provide many opportunities to supply the conditioned air to the rear seat.

The rear seat damper that is closed when the defroster damper is opened can also keep an adequate amount of warm air supplied to the defroster passage.

The vehicle air conditioner of the present invention also includes a rear seat duct serving as a rear seat passage. The rear seat damper is provided inside the rear seat duct.

For example, the vehicle air conditioner, of this configuration, that is not required to supply the conditioned air to the rear seat can work without the rear seat duct, and also without the rear seat damper. The body, of the air conditioner, accommodating a heat exchanger etc. needs no considerable modifications to its structure. Thus, it is possible to produce the vehicle air conditioner that supplies the conditioned air to the rear seat, and the vehicle air conditioner that does not, depending on its purpose at a low cost.

A third aspect of the invention is the vehicle air conditioner of the first or second aspect of the invention. The vehicle air conditioner of the third aspect of the invention includes a casing, a defroster damper power transmitter, and a rear seat damper power transmitter. The casing accommodates the defroster damper. The defroster damper power transmitter transmits driving power to the defroster damper. The rear seat damper power transmitter transmits driving power to the rear seat damper. The defroster damper power transmitter is disposed on one side of a widthwise direction of the casing. The rear seat damper power transmitter and the coupling member are disposed on the other side of the widthwise direction of the casing.

The defroster damper power transmitter is separated laterally from the rear seat damper power transmitter and the coupling member. This configuration prevents these components from interfering in each other during production.

According to the first aspect of the invention, the defroster damper operates with the rear seat damper. This configuration can reduce the cost, and can improve the comfortability of the rear seat passenger because it provides many opportunities to supply the conditioned air to the rear seat. The adequate defroster performance can also be achieved.

According to the second aspect of the invention, the rear seat damper is provided inside the rear seat duct serving the rear seat passage. That is, it is possible to produce the air conditioner that supplies the conditioned air to the rear seat, and the air conditioner that does not, depending on its purpose at a low cost.

According to the third aspect of the invention, the defroster damper power transmitter is separated laterally from the rear seat damper power transmitter and the coupling member. This configuration prevents these components from interfering in each other during production.

[FIG. 1] FIG. 1 is a perspective view of a vehicle air conditioner of an embodiment.
[FIG. 2] FIG. 2 is a left side view of the vehicle air conditioner.
[FIG. 3] FIG. 3 is a right side view of the vehicle air conditioner.
[FIG. 4] FIG. 4 is a back view of the vehicle air conditioner.
[FIG. 5] FIG. 5 is a cross-sectional view of the vehicle air conditioner.
[FIG. 6] FIG. 6 is a perspective view of FIG. 1 without a rear seat duct.
[FIG. 7] FIG. 7 is a perspective view of a rear seat duct.
[FIG. 8] FIG. 8 is a front view of the rear seat duct.
[FIG. 9] FIG. 9 is a left side view of the rear seat duct.

An embodiment of the present invention will be described in detailed below with reference to the drawings. The following description of the preferable embodiment is essentially only an example, and is not intended to restrict the present invention, its application, or its usage.

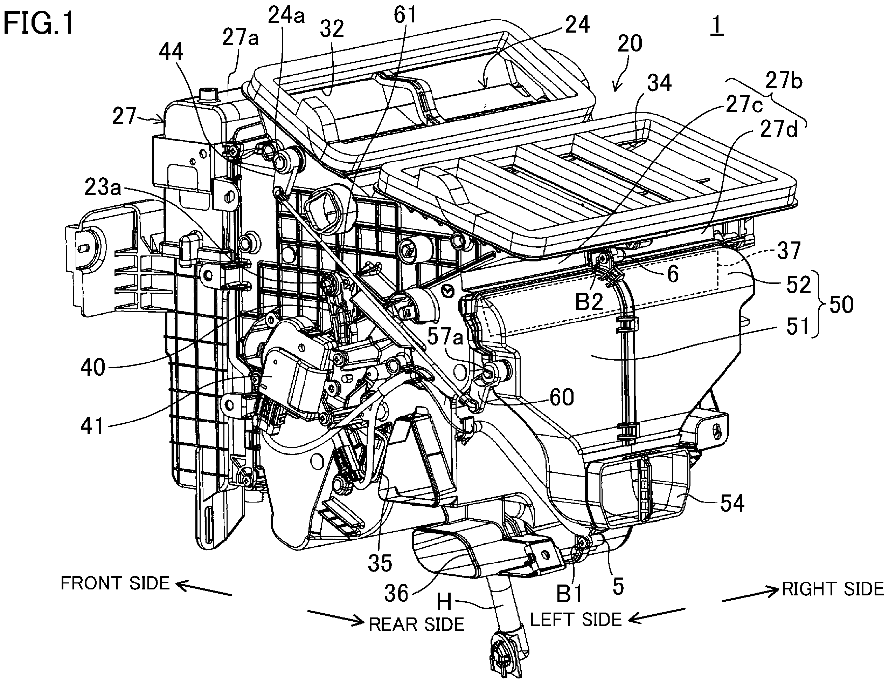

FIG. 1 is a back side perspective view of a vehicle air conditioner 1 of the embodiment of the present invention. The vehicle air conditioner 1 is installed in a vehicle, which is a so-called automobile. This vehicle includes a passenger compartment including a front seat and a rear seat. The front seat includes a driver seat and a passenger seat. This vehicle is also a left hand drive vehicle where a steering wheel (a driver seat) is disposed on the left side.

In the description of this embodiment, the front side of the vehicle is described only by "front," the rear side by "rear," the right side by "right," and the left side by "left."

The vehicle air conditioner 1 is installed inside an instrument panel (not shown) provided in a front end of the passenger compartment of the automobile.

The vehicle air conditioner 1 includes a blow unit (not shown), an air conditioning unit 20, and an air conditioning controller (not shown). The blow unit is disposed on a passenger seat side (the right side) of the vehicle. The air conditioning unit 20 is disposed in a widthwise (laterally) center portion. The blow unit is connected with the air conditioning unit 20. The blow unit and the air conditioning unit 20 are also fixed to, e.g., a dash panel and an instrument panel reinforcement (both not shown) of the vehicle.

The blow unit includes a blower including a sirocco fan. The blow unit also includes a switch for switching inside air and outside air. This switch selects either the air inside the passenger compartment or the air outside the passenger compartment to introduce it. The blow unit sends the air inside the passenger compartment or the air outside the passenger compartment to the air conditioning unit 20.

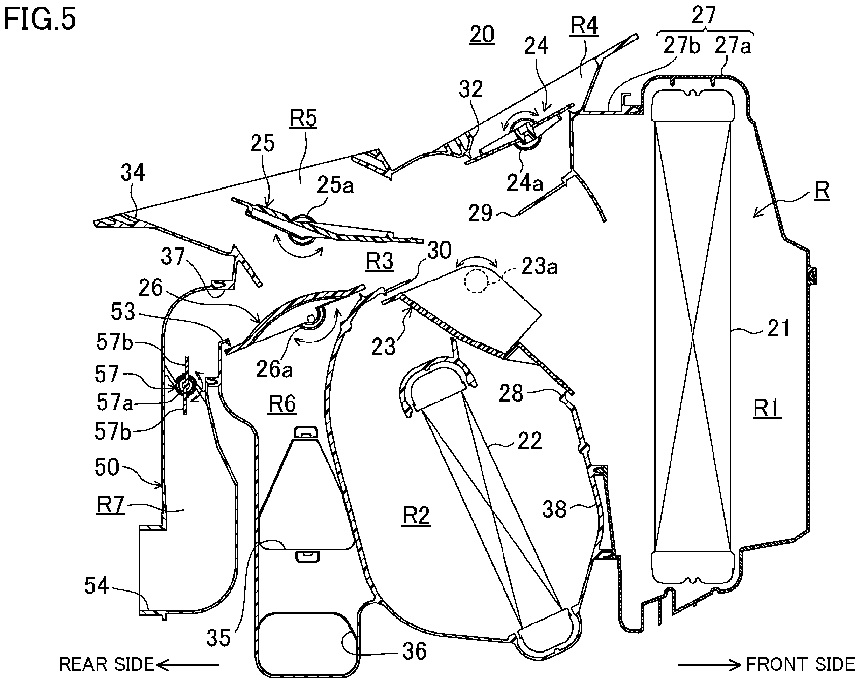

FIG. 5 illustrates an internal structure of the air conditioning unit 20. The air conditioning unit 20 includes a resin casing 27 that accommodates an evaporator 21, a heater core 22, an air mix damper 23, a defroster damper 24, a vent damper 25, and a heat damper 26. The evaporator 21 serves as a heat exchanger for cooling. The heater core 22 serves as a heat exchanger for heating.

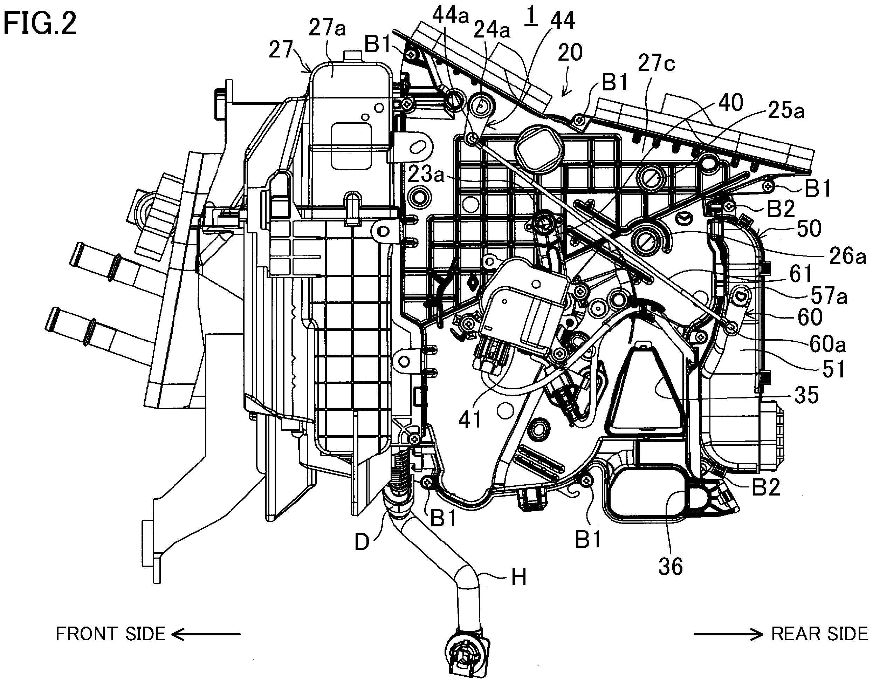

FIGS. 2-4 illustrate that the casing 27 includes a front side casing component 27a and a rear side casing component 27b that are separated at a longitudinally central portion. FIG. 5 illustrates that the front side casing component 27a accommodates the evaporator 21. FIG. 5 also illustrates that the rear side casing component 27b accommodates the heater core 22, the air mix damper 23, the defroster damper 24, the vent damper 25, and the heat damper 26.

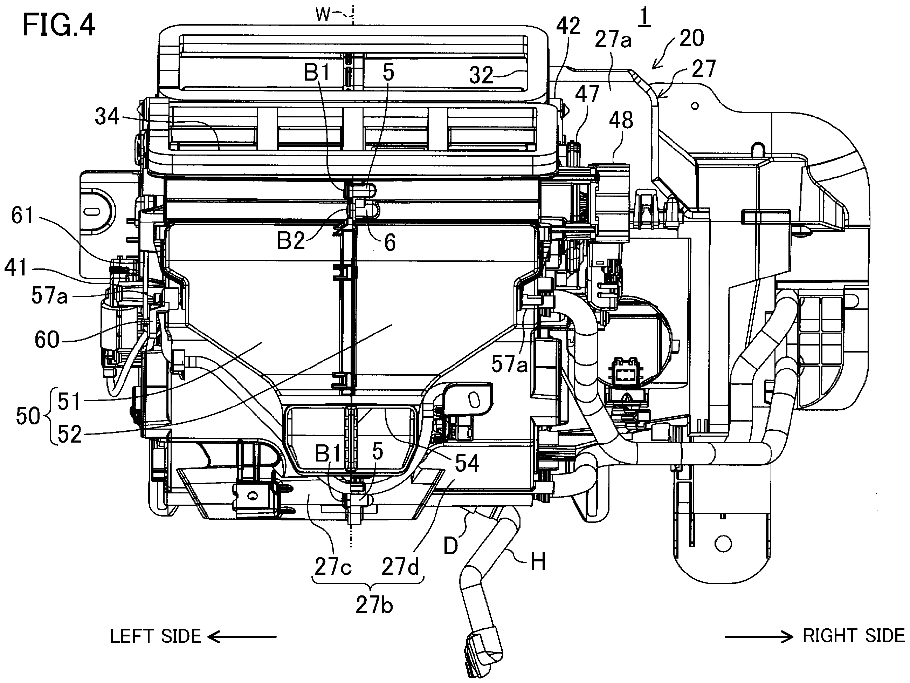

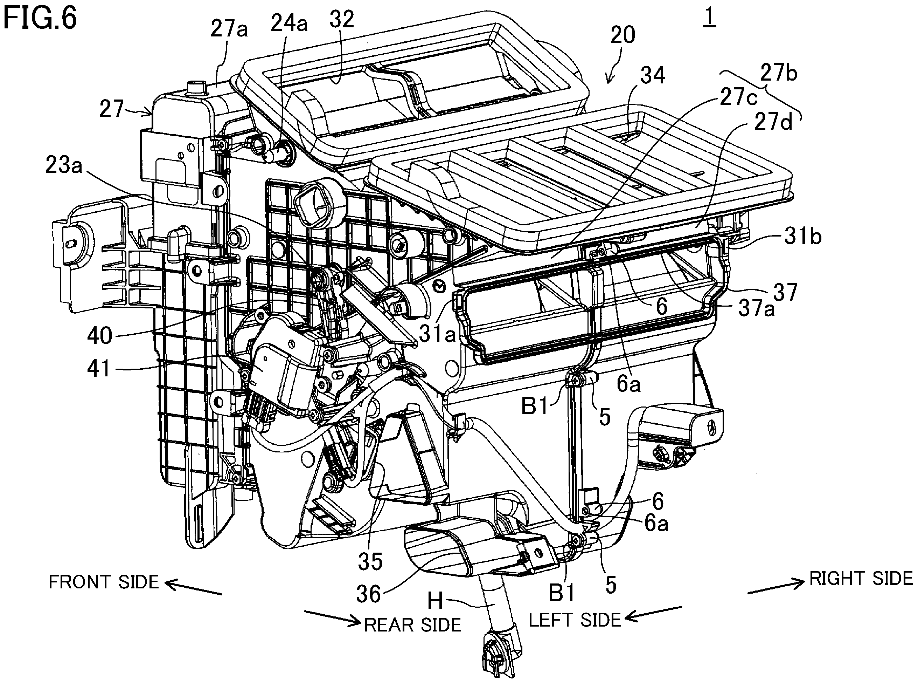

FIG. 6 also illustrates that the rear side casing component 27b includes a left side casing component 27c and a right side casing component 27d that are separated at a laterally central portion. In other words, the casing 27 has a four separation structure. A separation plane W (illustrated in FIG. 4 with an imaginary line) of the rear side casing component 27b is a generally vertical imaginary plane.

The left side casing component 27c has an end portion (a right end portion) that is coupled with the right side casing component 27d. The entire surface of this end portion of the left side casing component 27c is opened. The right side casing component 27d also has an end portion (a left end portion) that is coupled with the left side casing component 27c. The entire surface of this end portion of the right side casing component 27d is also opened.

FIGS. 4 and 6 illustrate that the right side casing component 27d includes the left end portion with a plurality of casing engagement bosses 5 disposed at some intervals. A small screw B1 is screwed into the casing engagement boss 5. The casing engagement bosses 5 are laterally columnar. The casing engagement bosses 5 each includes a screw hole (not shown). The screw hole opens at a left end surface of the casing engagement boss 5, and extends to the right side. That is, the small screw B1 is screwed from a left side of the casing engagement boss 5.

The left side casing component 27c also includes the right end portion with screw insertion holes (not shown) corresponding to the casing engagement bosses 5 of the right side casing component 27d. This screw insertion hole is disposed on the left side of the screw hole of the casing engagement boss 5, and aligned with the screw hole. The small screw B1 inserted into the screw insertion hole and screwed into the screw hole of the casing engagement boss 5 engages and integrates the left side casing component 27c with the right side casing component 27d.

Similarly, the front side casing component 27a is also engaged with and fixed to the rear side casing component 27b by screws (not shown).

FIG. 5 illustrates that an air passage R is formed in the casing 27. The conditioned air flows in the air passage R. The evaporator 21 is accommodated in the air passage R in the front side casing component 27a.

The conditioned air flows in a cooling passage R1 partially serving as the air passage R, and also passes through the evaporator 21. This conditioned air exchanges heat with a refrigerant in order to be cooled. During this time, the condensation water on a surface of the evaporator 21 moves downward on tubes or fins.

FIG. 2 illustrates that a drain part D is provided on a bottom wall portion of the casing 27. The drain part D collects and discharges the condensation water dropped from the evaporator 21. The drain part D is connected with a drain hose H that discharges the condensation water to the outside of the passenger compartment.

FIG. 5 illustrates that a defroster passage R4 is formed above an air mixing space R3 of the casing 27. The defroster passage R4 communicates with the air mixing space R3. The defroster passage R4 has a lower end serving as a defroster port 32 that is disposed on the top wall portion of the casing 27 and opens near the longitudinally center portion. This defroster port 32 is connected with a defroster duct (not shown) extending to a defroster nozzle of an instrument panel. The defroster nozzle supplies the conditioned air to the inner surface of the windscreen.

A vent passage R5 is also formed above the air mixing space R3 of the casing 27. The vent passage R5 is behind the defroster passage R4. The vent passage R5 also communicates with the air mixing space R3. The vent passage R5 has a lower end serving as a vent port 34. The vent port 34 is disposed on the top wall portion of the casing 27 and opens behind the defroster port 32. This vent port 34 is connected with a vent duct extending to a vent nozzle (not shown) of the instrument panel. The vent nozzle supplies the conditioned air mainly to an upper body of a passenger. The vent nozzle is provided on each of a right end portion, a left end portion, and a laterally center portion of the instrument panel.

A heat passage R6 is formed on a rear side of the casing 27. The heat passage R6 also communicates with the air mixing space R3. The heat passage R6 extends toward a lower side of the casing 27. The heat passage R6 has a lower end that communicates with a heat port 35 for a front seat and a heat port 36 for a rear seat. The heat port 35 and the heat port 36 are formed on the rear portion of the casing 27. The heat port 35 for a front seat is connected with a heat duct (not shown) for a front seat. This heat duct for a front seat extends toward legs of a front seat passenger. The heat port 36 for a rear seat is also connected with a heat duct (not shown) for a rear seat. This heat duct for a rear seat extends toward legs of a rear seat passenger.

FIGS. 5 and 6 also illustrate that an air port 37 for a rear seat is formed on a rear wall portion of the casing 27. The air port 37 for a rear seat blows the conditioned air that is supplied to the rear seat of the vehicle. The air port 37 for a rear seat opens near an upper portion of the rear wall portion of the casing 27, and communicates with the air mixing space R3. The air port 37 for a rear seat is laterally slender from the left side casing component 27c to the right side casing component 27d. A ring-shaped recessed portion 37a is formed on the rear wall portion of the casing 27. The recessed portion 37a surrounds the air port 37 for a rear seat.

A left side engagement hole 31 a and a right side engagement hole 31 b are formed on the rear wall portion of the casing 27. The left side engagement hole 31 a and the right side engagement hole 31 b are disposed outside the air port 37 for a rear seat. The left side engagement hole 31 a and the right side engagement hole 31 b are disposed near the left end portion and the right end portion of the air port 37, respectively. The left side engagement hole 31 a and the right side engagement hole 31 b engage with a left side engagement hook (an engagement portion) 55a and a right side engagement hook (an engagement portion) 55b of a rear seat duct 50 described later, respectively. The left side engagement hole 31 a and the right side engagement hole 31b are disposed outside the recessed portion 37a. The left side engagement hole 31a and the right side engagement hole 31b are through holes that penetrate longitudinally. The left side engagement hole 31a and the right side engagement hole 31b also extend vertically, and are generally rectangular.

FIG. 6 illustrates that duct engagement bosses 6 are formed on an upper side and a lower side of the rear wall portion of the casing 27. The rear seat duct 50 described later is engaged and fixed by the duct engagement bosses 6. Similarly to the casing engagement bosses 5, the duct engagement bosses 6 are laterally columnar. The duct engagement bosses 6 each includes a screw hole 6a. The screw hole 6a opens at a left end surface of the duct engagement boss 6, and extends to the right side. The duct engagement bosses 6 are also on the right side of the separation plane W between the left side casing component 27c and the right side casing component 27d. In other words, the duct engagement bosses 6 are disposed in a laterally offset manner with respect to the separation plane W.

FIG. 5 illustrates that a downstream portion of the cooling passage R1 of the air passage R branches into an upper side and a lower side of the rear side casing component 27b. The upper side and the lower side of the rear side casing component 27b communicate with an upper side opening 29 and a lower side opening 28. The upper side opening 29 is formed on an upper side of the partition 38 in the rear side casing component 27b. The lower side opening 28 is formed on a lower side of the partition 38 in the rear side casing component 27b.

The lower side opening 28 is connected with a heating passage R2 for heating the conditioned air. This heating passage R2 also partially serves as the air passage R. The upper side opening 29 is connected with the air mixing space R3 partially serving as the air passage R. A downstream side of the heating passage R2 is connected with the air mixing space R3.

The air mix damper 23 includes a rotating shaft 23a that extends laterally. Both end portions of the rotating shaft 23a penetrate through both right and left walls of the casing 27, and are rotatably supported by the casing 27.

The air mix damper 23 rotates on the rotating shaft 23a to open or close the upper side opening 29 and the lower side opening 28. The air mix damper 23 also opens or closes a lower end opening 30 of the heating passage R2. When the upper side opening 29 is completely opened, the lower side opening 28 and the lower end opening 30 of the heating passage R2 are completely closed. In contrast, when the upper side opening 29 is completely closed, the lower side opening 28 and the lower end opening 30 of the heating passage R2 are completely opened.

FIGS. 1 and 2 illustrate that a link 40 is fixed to the left end portion of the rotating shaft 23a of the air mix damper 23. This link 40 extends along the diameter of the rotating shaft 23a.

An air mixing actuator 41 for actuating the air mix damper 23 is installed on the left side wall portion of the casing 27. The air mixing actuator 41 includes an output shaft to which an arm (not shown) is fixed. This arm engages with the link 40 of the air mix damper 23.

In other words, the output of the air mixing actuator 41 is transmitted to the link 40 through the arm to rotate the air mix damper 23. The air mixing actuator 41 is connected with and controlled by the air conditioning controller in order to allow the air mix damper 23 to adjust the degree of openings of the openings 28, 29, and 30.

FIG. 5 illustrates that the defroster damper 24 opens or closes the defroster passage R4, and includes a rotating shaft 24a that extends laterally. Both end portions of the rotating shaft 24a penetrate through both the right and left walls of the casing 27, and are rotatably supported by the casing 27.

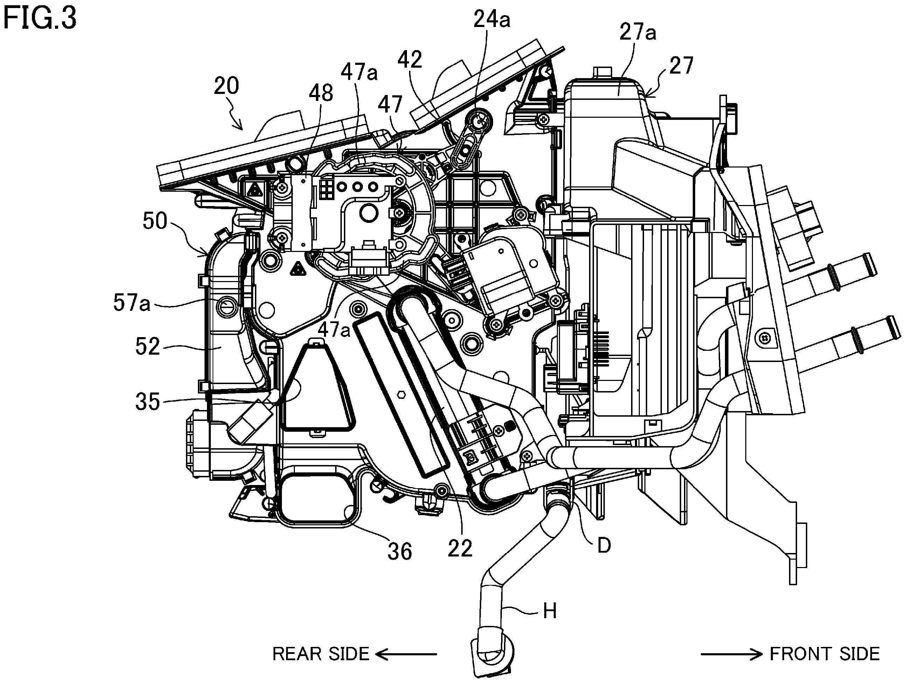

FIG. 3 illustrates that a link (a defroster damper power transmitter) 42 is fixed to the right end portion of the rotating shaft 24a of the defroster damper 24. The link 42 transmits driving power to the defroster damper 24.

This link 42 extends along the diameter of the rotating shaft 24a. The defroster damper 24 rotates on the rotating shaft 24a to open and close the defroster passage R4. The defroster damper 24 rotates clockwise to open the defroster passage R4 when viewed from the left side (as illustrated in FIG. 2), and counterclockwise to close the defroster passage R4 when viewed from the same side.

FIG. 2 illustrates that a coupling link (a rear seat damper power transmitter) 44 is fixed to the left end portion of the rotating shaft 24a of the defroster damper 24. The coupling link 44 transmits driving power to a rear seat damper 57 described later.

Similarly to the link 42 on the right side, this coupling link 44 also extends along the diameter of the rotating shaft 24a. An engagement hole 44a is formed on an end portion of the coupling link 44. The coupling link 44 extends downward independently of a rotation position of the defroster damper 24.

FIG. 5 illustrates that the vent damper 25 opens or closes the vent passage R5, and includes a rotating shaft 25a that extends laterally. Both end portions of the rotating shaft 25a penetrate through both the right and left walls of the casing 27, and are rotatably supported by the casing 27. A link (not shown) is fixed to the right end portion of the rotating shaft 25a of the vent damper 25. This link extends along the diameter of the rotating shaft 25a. The vent damper 25 rotates on the rotating shaft 25a to open or close the vent passage R5.

The heat damper 26 opens or closes the heat passage R6, and includes a rotating shaft 26a that extends laterally. Both end portions of the rotating shaft 26a penetrate through both the right and left walls of the casing 27, and are rotatably supported by the casing 27. A link (not shown) is fixed to the right end portion of the rotating shaft 26a of the heat damper 26. This link extends along the diameter of the rotating shaft 26a. The heat damper 26 rotates on the rotating shaft 26a to open or close the heat passage R6.

FIG. 3 illustrates that a main link 47 for switching operation modes is provided on the right side wall of the casing 27. The main link 47 is a generally circular plate, and rotatably installed on the right side wall of the casing 27. The main link 47 includes grooves 47a that engage with the links 42 of the defroster damper 24, the vent damper 25, and the heat damper 26.

An actuator 48 for switching operation modes is also installed on the right side wall of the casing 27. The actuator 48 for switching operation modes is connected with the air conditioning controller. The actuator 48 for switching operation modes includes an output shaft that is fixed to the main link 47. That is, the output of the actuator 48 for switching operation modes is transmitted to the links 42 of the defroster damper 24, the vent damper 25, and the heat damper 26 through the main link 47, and rotates the defroster damper 24, the vent damper 25, and the heat damper 26.

The rotation angles, rotation timing, etc. of the defroster damper 24, the vent damper 25, and the heat damper 26 depend on the shapes of the grooves 47a of the main link 47.

Available operation modes in this embodiment are, e.g., a defroster mode, a vent mode, a heat mode, a defrost/heat mode, and a bi-level mode. In the defroster mode, the defroster damper 24 is opened, and the vent damper 25 and the heat damper 26 are closed. In the vent mode, the vent damper 25 is opened, and the defroster damper 24 and the heat damper 26 are closed. In the heat mode, the heat damper 26 is opened, and the defroster damper 24 and the vent damper 25 are closed. In the defrost/heat mode, the defroster damper 24 and the heat damper 26 are opened, and the vent damper 25 is closed. In the bi-level mode, the vent damper 25 and the heat damper 26 are opened, and the defroster damper 24 is closed. The passenger may control an air conditioning control panel to switch the operation modes. The air conditioning controller may also switch the operation modes based on a room temperature, a preset temperature, etc.

FIG. 2 also illustrates that the heater core 22 is provided in the heating passage R2. Engine cooling water circulates in the heater core 22. This engine cooling water exchanges heat with the conditioned air in the heating passage R2 to heat the conditioned air.

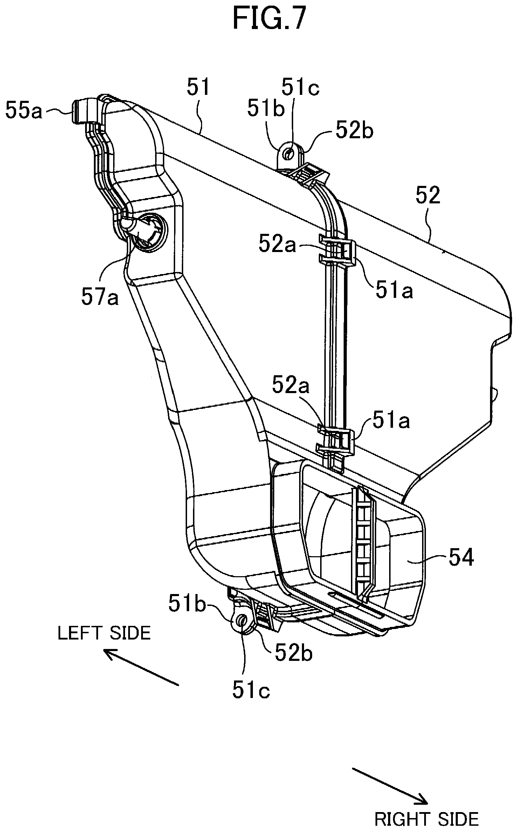

FIG. 1 illustrates that the air port 37 for a rear seat is connected with the rear seat duct 50. FIGS. 7-9 illustrates that the rear seat duct 50 extends generally vertically as a whole. FIG. 5 illustrates a passage inside the rear seat duct 50 serves as a rear seat vent passage (a rear seat passage) R7. This rear seat vent passage R7 communicates with the air mixing space R3 through the air port 37 for a rear seat.

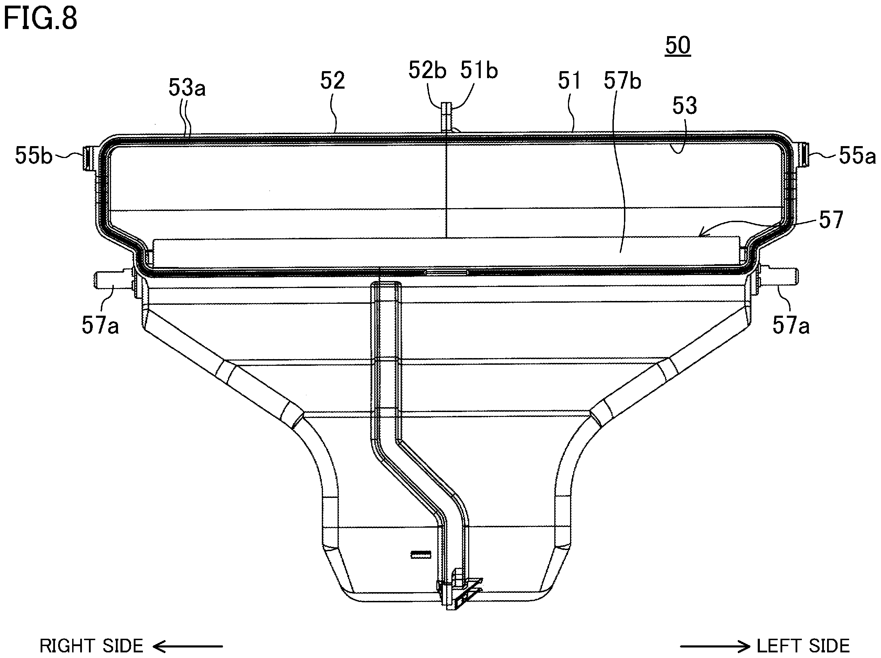

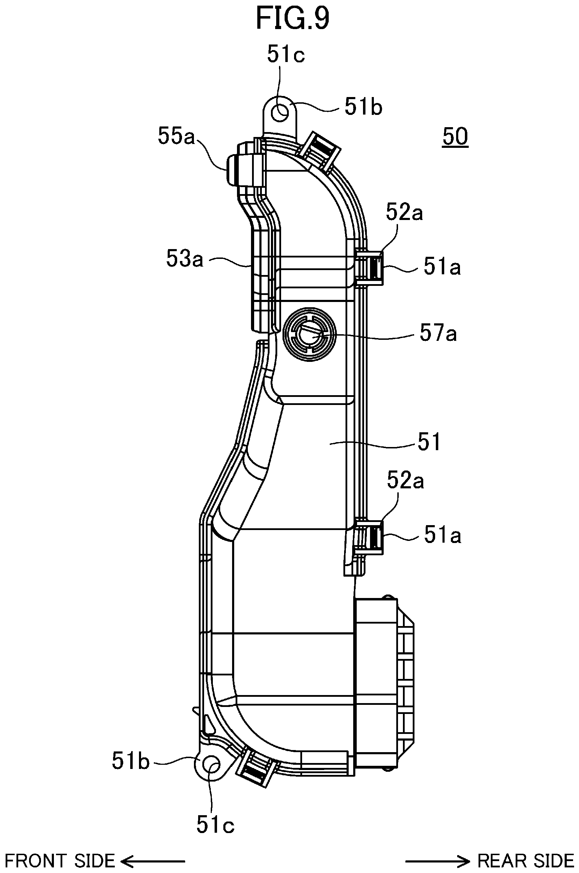

FIG. 8 illustrates that an upper portion of the rear seat duct 50 is widest. The rear seat duct 50 becomes narrower in a lower side. A lower portion of the rear seat duct 50 is narrowest. FIG. 9 also illustrates that the upper portion of the rear seat duct 50 is thinnest. The lower portion of the rear seat duct 50 is thickest.

FIG. 8 illustrates that an upper side opening 53 connected with the air port 37 for a rear seat is formed on an upper portion of a front wall portion of the rear seat duct 50. The upper side opening 53 is laterally slender similarly to the air port 37 for a rear seat. A raised portion 53a that protrudes forward is formed around the upper side opening 53. The raised portion 53a is ring-shaped and surrounds the upper side opening 53. This raised portion 53a engages with the recessed portion 37a of the casing 27 to avoid leakage of conditioned air.

The left side engagement hook 55a and the right side engagement hook 55b are formed on both a right end portion and a left end portion of the upper portion of the front wall portion of the rear seat duct 50, respectively. The left side engagement hook 55a and the right side engagement hook 55b protrude forward. The left side engagement hook 55a protrudes on the left side of a left edge of the raised portion 53a. The position of the left side engagement hook 55a corresponds to that of the left side engagement hole 31 a of the casing 27. The right side engagement hook 55b protrudes on the right side of a right edge of the raised portion 53a. The position of the right side engagement hook 55b corresponds to that of the right side engagement hole 31 b of the casing 27.

The left side engagement hook 55a and the right side engagement hook 55b are inserted from the rear side to the left side engagement hole 31a and the right side engagement hole 31b, and engage with peripheries of the left side engagement hole 31a and the right side engagement hole 31b. This allows the rear seat duct 50 to be temporarily held.

FIG. 9 illustrates that the rear seat duct 50 includes a lower portion that is bent backward, and includes a lower side opening 54 that opens to the rear side (as illustrated in FIG. 7 etc.). The lower side opening 54 is connected with an upstream end portion of a floor duct (not shown). This floor duct extends along an upper surface of a floor and opens near the rear seat.

FIGS. 7 and 8 illustrate that, similarly to the rear side casing component 27b, the rear seat duct 50 includes a left side duct component 51 and a right side duct component 52 that are separated at the laterally central portion.

The right side duct component 52 includes a left end portion with engagement hooks 52a disposed at some intervals. On the other hand, the left side duct component 51 includes a right end portion with engagement holes 51 a that engage with the engagement hooks 52a of the right side duct component 52.

Right side engagement tabs 52b are formed on an upper end portion and a lower end portion of the right side duct component 52. The right side engagement tabs 52b engage with the casing 27. The right side engagement tabs 52b extend longitudinally and toward the outside of the rear seat duct 50. The right side engagement tabs 52b each includes a screw insertion hole 52c that penetrates laterally. This screw insertion hole 52c is aligned with the screw hole 6a of the duct engagement boss 6.

FIG. 7 also illustrates that left side engagement tabs 51 b are formed on an upper end portion and a lower end portion of the left side duct component 51. The left side engagement tabs 51 b engage with the casing 27. The left side engagement tabs 51b extend along the right side engagement tabs 52b of the right side duct component 52. The left side engagement tabs 51b each includes a screw insertion hole 51c that penetrates laterally. This screw insertion hole 51c is aligned with the screw insertion hole 52c of the right side duct component 52.

The right side engagement tab 52b of the right side duct component 52 and the left side engagement tab 51 b of the left side duct component 51 engage with the duct engagement boss 6 through a screw B2.

FIG. 5 illustrates that the rear seat duct 50 accommodates the rear seat damper 57. The rear seat damper 57 is disposed in a position, closer to the upper side opening 53, between the upper side opening 53 and the lower side opening 54 of the rear seat duct 50. The rear seat damper 57 includes a rotating shaft 57a and two blocking plates 57b and 57b. The rotating shaft 57a extends laterally. The blocking plates 57b and 57b extend in both directions along the diameter of the rotating shaft 57a. The rotating shaft 57a penetrates through both the right and left walls of the rear seat duct 50 and is rotatably supported by both the walls.

The rear seat damper 57 opens the rear seat vent passage R7 when the blocking plates 57b and 57b are oriented vertically (as illustrated in FIG. 5). The rear seat damper 57 closes the rear seat vent passage R7 when the blocking plates 57b and 57b are oriented diagonally.

FIGS. 1 and 2 illustrate that the rear seat damper 57 includes the rotating shaft 57a having a left end portion fixed to a link 60. The link 60 extends along the diameter of the rotating shaft 57a. An engagement hole 60a is formed on an end portion of the link 60. The link 60 extends downward independently of a rotation position of the rear seat damper 57.

The rotation of the rear seat damper 57 is in the opposite direction to that of the defroster damper 24. In other words, the rear seat damper 57 rotates counterclockwise to open the rear seat vent passage R7 when viewed from the left side (as illustrated in FIG. 2), and clockwise to close the rear seat vent passage R7 when viewed from the same side.

FIGS. 1 and 2 illustrate that the air conditioner 1 includes a rod (a coupling member) 61. The rod 61 couples the link 60 of the rear seat damper 57 with the coupling link 44 of the defroster damper 24. The rod 61 transmits power for opening or closing the defroster damper 24 to the rear seat damper 57. The rod 61 allows the rear seat damper 57 to operate with the defroster damper 24.

The rod 61 is made of so stiff a metal as not to be easily deformed by the power for opening or closing the defroster damper 24. The rod 61 is also generally straight. One end portion of the rod 61 is so fully disposed inside and engaged with the engagement hole 44a of the coupling link 44 of the defroster damper 24 as not to come out of the engagement hole 44a. On the other hand, the other end portion of the rod 61 is so fully disposed inside and engaged with the engagement hole 60a of the link 60 of the rear seat damper 57 as not to come out of the engagement hole 60a.

The rod 61 has so appropriate a length as to enable the rear seat damper 57 to be closed when the defroster damper 24 is opened, and the rear seat damper 57 to be opened when the defroster damper 24 is closed. This allows the actuator 48 for switching operation modes to open or close the rear seat damper 57 without the extra actuator for the rear seat damper.

Next, the operation of the vehicle air conditioner 1 will be described.

The blow unit blows the conditioned air, which flows into the cooling passage R1 of the air passage R of the casing 27 and passes through the evaporator 21. The amount of air that flows into the heating passage R2 depends on the rotation position of the air mix damper 23. The air that flows into the heating passage R2 passes through the heater core 22 for heating, and then flows into the air mixing space R3. On the other hand, the air that does not flow into the heating passage R2 flows directly from the cooling passage R1 to the air mixing space R3.

The conditioning air generated in the air mixing space R3 flows toward the defroster passage R4, the vent passage R5, the heat passage R6, and the rear seat vent passage R7. During this time, the operation mode depends on whether the defroster damper 24, the vent damper 25, and the heat damper 26 are opened or closed. The conditioning air is supplied to every part of the passenger compartment depending on the operation mode.

For example, when the defroster damper 24 is opened in the defroster mode, the rear seat damper 57 is closed with the movement of this defroster damper 24. This configuration prevents the conditioned air in the air mixing space R3 from flowing into the rear seat vent passage R7, and thus allows the air mixing space R3 to keep a large amount of conditioned air supplied to the defroster port 32. That is, this configuration can supply an adequate amount of conditioned air to an inner surface of a front screen, and thus can provide high defroster performance.

In contrast, when the defroster damper 24 is closed in the vent mode, the heat mode, or the bilevel mode, the rear seat damper 57 is opened with the movement of the defroster damper 24. This configuration can supply the conditioned air to the rear seat in the multiple operation modes, and thus can improve the comfortability of a rear seat passenger.

As described above, the vehicle air conditioner 1 of this embodiment includes the defroster damper 24 that is opened or closed by the actuator 48 for switching operation modes. The driving power of the actuator 48 enables the rear seat damper 57 to be opened or closed without the extra actuator for the rear seat damper. The rear seat damper 57 that is opened when the defroster damper 24 is closed can supply the conditioned air to the rear seat in various operation modes. This configuration can provide many opportunities to supply the conditioned air to the rear seat. The rear seat damper 57 that is closed when the defroster damper 24 is opened can also keep an adequate amount of warm air supplied to the defroster passage R4.

This configuration can reduce the cost of the vehicle air conditioner 1, and can improve the comfortability of the rear seat passengers because it provides many opportunities to supply the conditioned air to the rear seat. The adequate defroster performance can also be achieved.

The vehicle air conditioner 1 that is not required to supply the conditioned air to a rear seat can also work without the rear seat duct 50, and also without the rear seat damper 57. The casing 27 also requires no air port 37 for a rear seat. In this case, the casing 27 only have to be produced by a mold having a nest to avoid a molding of the air port 37 for a rear seat. That is, the casing 27, of the air conditioner 1, accommodating the evaporator 21, the heater core 22, etc. needs no considerable modifications to its structure. Thus, it is possible to produce the vehicle air conditioner 1 that supplies the conditioned air to the rear seat, and the vehicle air conditioner 1 that does not, depending on its purpose at a low cost.

The link 42 of the defroster damper 24 is disposed on the right side of the casing 27. The coupling link 44 and the rod 61 are disposed on the left side of the casing 27. In this manner, the link 42 of the defroster damper 24 is separated laterally from the coupling link 44 and the rod 61. This configuration prevents these components from interfering in each other during production.

The rear seat damper 57 of this embodiment operates with the defroster damper 24 through the metal rod 61. Alternatively, the rear seat damper 57 may operate with the defroster damper 24 through, e.g., a resin link or a push-pull wire.

The link 42 of the defroster damper 24 may also be disposed on the left side of the casing 27. The coupling link 44 and the rod 61 may be disposed on the right side of the casing 27. Alternatively, the link 42, the coupling link 44, and the rod 61 may be disposed together on either the left side or the right side of the casing 27.

The vehicle of this embodiment is a left hand drive vehicle. In contrast, a right hand drive vehicle may include a vehicle air conditioner 1 with a symmetric configuration. In this case, a rear seat duct 50 that is symmetric can be used for both the vehicle air conditioner 1 for a left hand drive vehicle and the vehicle air conditioner 1 for a right hand drive vehicle, thereby reducing the cost.

The rear seat duct 50 of this embodiment also has the lateral two separation structure. Alternatively, the rear seat duct 50 may be an integrally molded article.

The present invention is also applicable if an extra duct is attached to a full-center type vehicle air conditioner including a blower and a heat exchanger that are disposed together in a widthwise center portion.

The defroster damper 24 of this embodiment is actuated by the actuator 48 for switching operation modes. Alternatively, the defroster damper 24 may be actuated by a passenger's command transmitted through, e.g., a wire.

As described above, the vehicle air conditioner of the present invention can be applied to, e.g., a vehicle air conditioner including a duct for supplying conditioned air to a rear seat of an automobile.

### DESCRIPTION OF REFERENCE CHARACTERS

- 1: Vehicle Air Conditioner
- 21: Evaporator (Heat Exchanger for Cooling)
- 22: Heater Core (Heat Exchanger for Heating)
- 24: Defroster Damper
- 25: Vent Damper
- 26: Heat Damper
- 27: Casing
- 42: Link (Defroster Damper Power Transmitter)
- 44: Coupling Link (Rear Seat Damper Power Transmitter)
- 48: Actuator for Switching Operation Modes
- 50: Rear Seat Duct
- 57: Rear Seat Damper
- 61: Rod (Coupling Member)
- R3: Air Mixing Space
- R4: Defroster Passage
- R5: Vent Passage
- R6: Heat Passage
- R7: Rear Seat Vent Passage (Rear Seat Passage)

## Claims

1. A vehicle air conditioner (1) including
a defroster passage (R4) for supplying conditioned air toward an inner surface of a windscreen of a vehicle;
a vent passage (R5) for supplying the conditioned air to a front seat passenger;
a heat passage (R6) for supplying the conditioned air to legs of the front seat passenger;
a rear seat passage (R7) for supplying the conditioned air to a rear seat;
a defroster damper (24) for opening or closing the defroster passage;
a rear seat damper (57) for opening or closing the rear seat passage, and
a coupling member (61) coupling the defroster damper (24) with the rear seat damper (57) and allowing the rear seat damper to operate with the defroster damper,
**characterized in that**
the vehicle air conditioner comprises a rear seat duct (50) serving as a rear seat passage,
wherein
the rear seat damper (57) is provided inside the rear seat duct, (50) and the rear seat damper is opened when the defroster damper is closed, and the rear seat damper is closed when the defroster damper is opened.

2. The vehicle air conditioner of claim 1, comprising:
a casing (27) accommodating the defroster damper;
a defroster damper power transmitter transmitting driving power to the defroster damper; (24) and
a rear seat damper power transmitter transmitting driving power to the rear seat damper, (57) wherein
the defroster damper power transmitter is disposed on one side of a widthwise direction of the casing, and
the rear seat damper power transmitter and the coupling member are disposed on the other side of the widthwise direction of the casing.

## Patentansprüche

1. Fahrzeugklimaanlage (1), umfassend:
einen Defrosterdurchlass (R4) zum Zuführen von klimatisierter Luft hin zu einer Innenfläche einer Windschutzscheibe eines Fahrzeugs;
einen Lüftungsdurchlass (R5) zum Zuführen der klimatisierten Luft zu einem Beifahrer;
einen Wärmedurchlass (R6) zum Zuführen der klimatisierten Luft zu Beinen des Beifahrers;
einen Rücksitzdurchlass (R7) zum Zuführen der klimatisierten Luft zu einem Rücksitz;
eine Defrosterklappe (24) zum Öffnen oder Schließen des Defrosterdurchlasses;
eine Rücksitzklappe (57) zum Öffnen oder Schließen des Rücksitzdurchlasses und
ein Kopplungselement (61), das die Defrosterklappe (24) mit der Rücksitzklappe (57) koppelt und die Rücksitzklappe mit der Defrosterklappe arbeiten lässt,
**dadurch gekennzeichnet, dass**
die Fahrzeugklimaanlage einen Rücksitzkanal (50) umfasst, der als Rücksitzdurchlass dient,
wobei die Rücksitzklappe (57) in dem Rücksitzkanal (50) vorgesehen ist und die Rücksitzklappe geöffnet wird, wenn die Defrosterklappe geschlossen wird und die Rücksitzklappe geschlossen wird, wenn die Defrosterklappe geöffnet wird.

2. Fahrzeugklimaanlage nach Anspruch 1, umfassend:
ein Gehäuse (27), das die Defrosterklappe aufnimmt;
einen Defrosterklappen-Leistungsüberträger, der zu der Defrosterklappe (24) Antriebsleistung überträgt; und
einen Rücksitzklappen-Leistungsüberträger, der zu der Rücksitzklappe (57) Antriebsleistung überträgt, wobei
der Defrosterklappen-Leistungsüberträger an einer Seite einer Breitenrichtung des Gehäuses angeordnet ist und
der Rücksitzklappen-Leistungsüberträger und das Kopplungselement an der anderen Seite der Breitenrichtung des Gehäuses angeordnet sind.

## Revendications

1. Climatiseur de véhicule (1) comportant
un passage de dégivrage (R4) destiné à alimenter de l'air conditionné en direction d'une surface intérieure d'un pare-brise d'un véhicule ;
un passage de ventilation (R5) destiné à alimenter l'air conditionné vers un passager avant ;
un passage de chauffage (R6) destiné à alimenter l'air conditionné vers des jambes du passager avant ;
un passage de siège arrière (R7) destiné à alimenter l'air conditionné vers un siège arrière ;
un registre de dégivrage (24) destiné à ouvrir ou fermer le passage de dégivrage ;
un registre de siège arrière (57) destiné à ouvrir ou fermer le passage de siège arrière, et
un élément de couplage (61) couplant le registre de dégivrage (24) au registre de siège arrière (57) et permettant au registre de siège arrière de fonctionner avec le registre de dégivrage,
**caractérisé en ce que**
le climatiseur de véhicule comprend un conduit de siège arrière (50) servant de passage de siège arrière, dans lequel
le registre de siège arrière (57) est prévu à l'intérieur du conduit de siège arrière (50) et le registre de siège arrière est ouvert quand le registre de dégivrage est fermé et le registre de siège arrière est fermé quand le registre de dégivrage est ouvert.

2. Climatiseur de véhicule selon la revendication 1, comprenant :
un boîtier (27) recevant le registre de dégivrage ;
un transmetteur d'énergie de registre de dégivrage transmettant de l'énergie d'entraînement au registre de dégivrage (24) ; et
un transmetteur d'énergie de registre de siège arrière transmettant de l'énergie d'entraînement au registre de siège arrière (57), dans lequel
le transmetteur d'énergie de registre de dégivrage est disposé d'un côté dans le sens de la largeur du boîtier, et
le transmetteur d'énergie de registre de siège arrière et l'élément de couplage sont disposés de l'autre côté dans le sens de la largeur du boîtier.
